# EUROPEAN PATENT SPECIFICATION

(11) **EP 1 666 628 B1**
(45) Date of publication and mention of the grant of the patent: **06.05.2009**
(21) Application number: 05023404.6
(22) Date of filing: 26.10.2005
(51) Int. Cl.: C23C 8/36, F16C 33/14, F16C 23/04, C23C 8/24

(54) **Bearing with a self-lubricating liner of one bearing element in sliding contact with a nitride hardened counterface of a titanium bearing element**
Lager mit einer selbstschmierenden Schicht eines Lagerteils in Gleitkontakt mit einer nitriergehärteten Gegenfläche eines Titanlagerteils
Palier avec une couche auto-lubrifiante d'un élément de palier en contact lisse avec une contre-surface trempée par nitruration d'un élément de palier en titane

(30) Priority: 03.12.2004 GB 0426633
(43) Date of publication of application: 07.06.2006
(73) Proprietor: MINEBEA Co., Ltd., Kitasaku-gun, Nagano 389-0293 (JP)
(72) Inventor: Smith, Paul, Lincoln LN6 3RA (GB)
(74) Representative: Hoarton, Lloyd Douglas Charles

(56) References cited:
- EP-A- 0 189 626
- US-A- 3 685 878
- US-A- 5 137 374

## Description

**THE PRESENT INVENTION** relates to a self-lubricating bearing and in particular to a self-lubricating bearing having an improved counterface.

Self-lubricating bearings typically comprise a housing having a liner which is in sliding contact with a counterface. In the case of spherical bearings, the counterface is provided by the outer surface of a ball and the housing is provided with a self-lubricating liner comprising woven or meshed fibres suffused with a resin to hold together a quantity of PTFE or other self lubricating material

Conventional materials for the ball include stainless steel and copper alloys, which are selected for their strength, hardness and resistance to corrosion. The materials, however, are relatively heavy and therefore solutions have been sought using more lightweight materials. In this respect, it is possible to replace stainless steel and copper alloys on a strength basis with titanium alloys which are approximately 40% lighter. Unfortunately, titanium alloys are generally softer than stainless steel and copper alloys. As a result, the counterface of the ball is more susceptible to scoring from debris which find its way between the counterface and liner. Additionally, the surface finish or roughness of the counterface after machining the ball is generally much poorer than that possible with stainless steel and copper alloys. Any irregularities in the counterface wear at and eventually damage the self-lubricating liner. It is therefore important that the counterface has a relatively smooth finish.

US 5,137,374 describes a self-lubricating bearing comprising an inner race having a bearing surface, a self-lubricating liner secured to the bearing surface, and an outer race having a counterface in sliding contact with the liner. The outer race comprises a body of a titanium alloy having a hard coating of titanium nitride or chromium oxide disposed over the counterface. Whilst the hard coating serves to minimise subsequent scoring of the counterface, the surface roughness of the coating substantially corresponds to the underlying surface roughness of the titanium alloy. Consequently, the surface roughness of the counterface remains relatively poor.

It is therefore an object of the present invention to provide a self-lubricating bearing comprising a relatively light-weight bearing element having a counterface of improved surface roughness.

In a first aspect, the present invention provides a method of manufacturing a self lubricating bearing comprising the steps of:
providing a bearing element of a titanium alloy;
nitriding at least a portion of a surface of the bearing element to form a nitride diffusion layer;
machining a surface of the nitride diffusion layer to produce a counterface having a surface roughness of less than 18 nm;
depositing a coating of wear-resistant material over the surface of the nitride diffusion layer;
providing a self-lubricating liner; and
arranging the bearing element and liner such that the counterface is in sliding contact with the liner.

Preferably, the surface of the nitride diffusion layer is machined so as to produce a counterface having a surface roughness less than 6 nm.

Conveniently, the surface of the bearing element prior to nitriding has an initial surface roughness and the nitride diffusion layer prior to machining extends to a depth greater than the depth of the initial surface roughness.

Preferably, the nitride diffusion layer prior to machining extends to a depth of at least 25 µm,

Advantageously; the nitride diffusion layer is machined by electrolytic grinding.

Conveniently, the temperature of the bearing element during nitriding is maintained below 750 °C.

Preferably, nitriding continues for no more than four hours.

Preferably, the coating is no more than 4 µm thick.

Advantageously, the hardness of the coating is greater than that of the surface of the nitride diffusion layer after machining.

In a second aspect, the present invention provides a self lubricating bearing comprising a self-lubricating liner and a bearing element having a counterface in sliding contact with the liner, wherein the bearing element is of a titanium alloy having a nitride diffusion layer at the counterface, and the counterface has a surface roughness less than 18 nm, wherein the bearing element further comprises a coating of a wear-resistant material disposed over the nitride diffusion layer.

Preferably, the surface roughness of the counterface is less than 6 nm.

Advantageously, the hardness of the wear-resistant material is greater than that at the surface of the nitride diffusion layer.

Preferably, the layer of wear-resistant material is no more than 4 µm thick.

Conveniently, the hardness of the counterface is at least 75 Rc.

Advantageously, the counterface has a spherical curvature.

Preferably, the bearing element is a ball.

In a third aspect, the present invention provides a bearing element for use in a self-lubricating bearing, the bearing element being of a titanium alloy and having a nitride diffusion layer at a counterface, and the counterface has a surface roughness less than 18 nm, wherein the bearing element further comprises a coating of a wear-resistant material disposed over the nitride diffusion layer.

In order that the present invention may be more readily understood, embodiments of the invention will now be described, by way of example, with reference to the accompanying drawings, in which:
FIGURE 1 is a cross-sectional view of a self-lubricating bearing embodying the present invention;
FIGURE 2 is a exploded cross-sectional view of a region of the self lubricating bearing of Figure 1; and
FIGURE 3 is an exploded cross-sectional view of a region of an alternative self-lubricating bearing embodying the present invention.

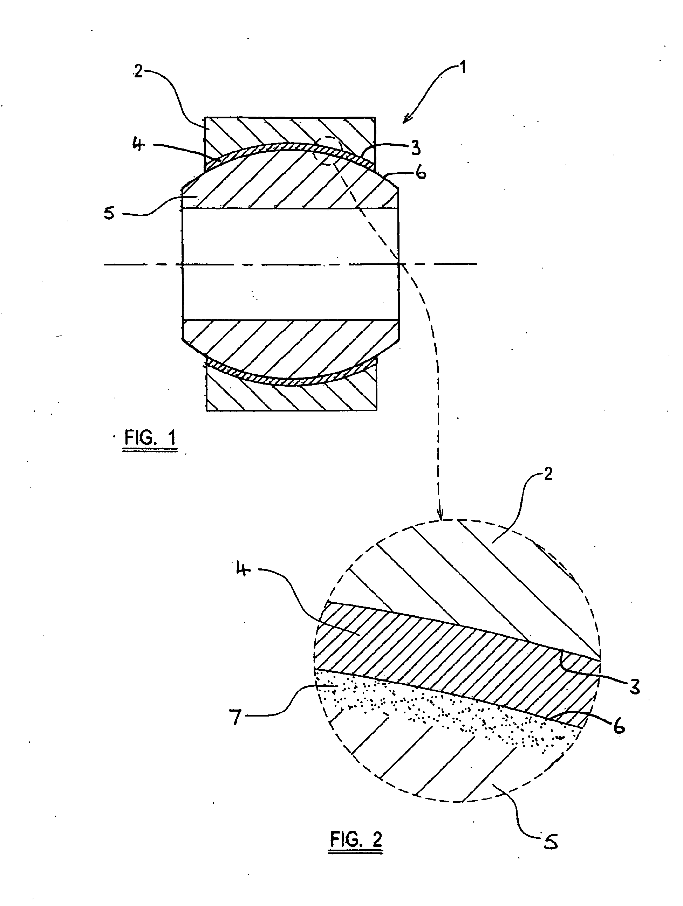

The self-lubricating bearing 1 of Figure 1 comprises a housing 2 having a bearing surface 3, a self-lubricating liner 4 secured to the bearing surface 3, and a bearing element 5 held within the housing 2 and having a counterface 6 in close sliding contact with the liner 4.

In the embodiment illustrated in Figure 1, the self-lubricating bearing 1 is a spherical bearing in which the bearing surface 3 and counterface 6 are spherical. Whilst reference will continue to be made to a spherical self-lubricating bearing 1, it is to be understood that the present invention is not limited to spherical bearings but is equally applicable to other forms of self lubricating bearing, including, but not limited to, cylindrical journal bearings and flat-contact bearings.

Referring now to Figure 2, the bearing element 5 is of a titanium alloy having a nitride diffusion layer 7 at the counterface 6. The counterface 6 has a surface roughness of less than 18 nm centreline average (CLA), and preferably less than 6 nm. In having a surface roughness less than 18 nm, potential wear and damage of the self-lubricating liner 4 by the counterface 6 is significantly reduced. As a consequence, the lifespan of the bearing 1 is increased.

The hardness of the counterface 6 is preferably greater than 75 Rc, so as to minimise scoring of the counterface 6 during subsequent use of the self lubricating bearing 1.

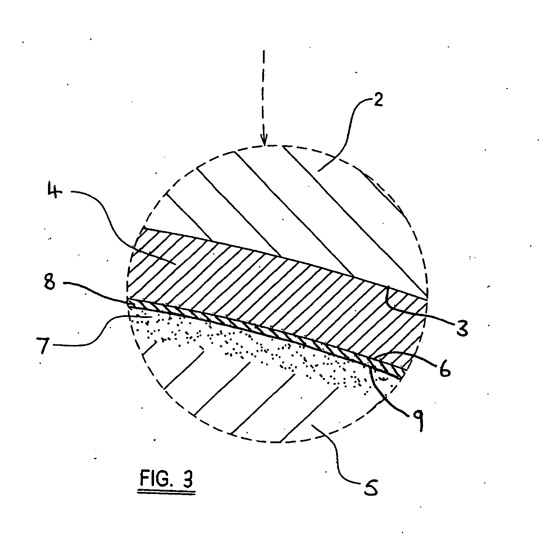

Figure 3 illustrates an alternative embodiment of the present invention in which the bearing element 5 includes a layer of wear-resistant material 8 disposed over the nitride diffusion layer 7. The layer of wear-resistant material 8 serves to provide a counterface 6 of increased hardness. As a result, scoring of the counterface 6 during subsequent use is further minimised. The hardness of the wear-resistant material 8 is greater than that of the surface 9 of the nitride diffusion layer 7, and is preferably greater than 80 Rc. Suitable wear-resistant materials include, but are not limited to, titanium carbide, titanium nitride, titanium carbonitride, titanium aluminium nitride, chromium nitride, chromium carbide and tungsten carbide, and tungsten carbide-graphite. The thickness of the layer of wear-resistant material 8 is preferably between 1 and 4 µm, and more preferably around 2 µm.

Owing to the thickness and manner in which the layer of wear-resistant material 8 is formed over the surface 9 of the nitride diffusion layer 7, the surface roughness of the counterface 6 is comparable to the underlying surface 9 of the nitride diffusion layer 7. Consequently, a counterface 6 having a surface roughness less than 18 nm, and preferably less than 6 nm, is effectively maintained.

A method of manufacturing the self-lubricating bearing 1 of Figures 1 to 3 will now be described.

A bearing element 5 of a titanium alloy is first provided, the outer surface of which provides a counterface 6. Owing to the relative softness of the titanium alloy (which is typically between 30-40 Rc), the counterface 6 at this stage typically has a surface roughness of around 50 nm CLA.

The counterface 6 of the bearing element 5 is then nitrided to form a nitride diffusion layer 7 at the counterface 6. Nitriding is preferably performed by means of a plasma nitriding process employing a triode configuration. The specific details of triodic plasma nitriding have been described elsewhere, e.g. 'Formation of aluminum nitride by intensified plasma ion nitriding', E.I. Meletis and S. Yan, J. Vac. Sci. Technol., A9, 2279 (1991).

Whilst reference will now be made to the typical conditions employed in nitriding the bearing element 5 by triode plasma nitriding, other forms of nitriding, such as diode plasma nitriding and gas nitriding, may equally be employed. However, triode plasma nitriding is favoured owing to its ability to form relatively thick nitride diffusion layers at relatively low temperatures over relatively short time scales. As a result, the reduction in fatigue strength of the bearing element 5 following the nitriding process is much less than that when diode plasma or gas nitriding is employed. Additionally, manufacturing times are substantially reduced.

Nitriding begins by inserting the bearing element 5 into a nitriding chamber, which is then evacuated and flushed with an inert gas (e.g. argon) several times to remove any oxygen from the chamber. The counterface 6 of the bearing element 5 is then cleaned using conventional sputtering techniques, e.g. holding the bearing element 5 at 2 kV and sputter cleaning with argon for ten or so minutes.

Nitrogen is introduced into the chamber and the pressure within the nitriding chamber is maintained between 1x10⁻³ and 1x10⁻¹ mbar, and preferably around a 1x10⁻² mbar, during the nitriding process. A biasing voltage of between 500 V and 5 kV, and preferably about 1 kV, is then applied to the bearing element 5.

A current is applied to a thermionic emission source (e.g. tungsten filament) such that a current density of between 0.2 and 4 mA/cm², and preferably between about 0.5 and 2 mA/cm², is produced at the bearing element 5. The ion collector is preferably held at between 0 and 150 V and more preferably around 100 V.

At the preferred current density range of 0.5 to 2 mA/cm², the temperature of the bearing element typically rises to between 650 and 700 °C, but does not exceed 750 °C.

The nitriding process continues until a nitride diffusion layer 7 of preferably at least 10 µm, and more preferably at least 25 µm, thick is formed at the counterface 6. The depth of the nitride diffusion layer 7 depends upon the initial surface roughness of the counterface 6 as well as the desired, final surface roughness. Preferably, the nitride diffusion layer 7 is at least as deep as the features responsible for the initial surface roughness of the counterface 6. Accordingly, the final surface roughness of the counterface 6 is determined only by the machining process (described below), i.e. the initial surface roughness of the counterface 6 does not influence the final surface roughness. More preferably, the nitride diffusion layer 7 is at least 5 µm deeper than the depth of the initial surface roughness of the counterface 6 such that a nitride diffusion layer 7 of at least 5 µm is maintained at the counterface 6 after machining the nitride diffusion layer 7.

In order to obtain a nitride diffusion layer of between 10-25 µm thick, the nitriding process typically lasts between 1 and 3 hours at the preferred conditions outlined above. The processing time naturally depends upon the depth of the nitride diffusion layer 7 as well as the nitriding conditions that are employed, particularly the biasing voltage, the cathode current density, the ion collector voltage, the nitrogen pressure, and the processing time. Longer processing times and/or higher current densities may naturally be employed to achieve a deeper nitride diffusion layer 3. However, the fatigue strength of the bearing element 5 deteriorates with increasing current density (i.e. temperature of the element 5) and processing time. Accordingly, the temperature of bearing element 5 preferably does not exceed 750 °C and the processing time is preferably no greater than 4 hours.

Once the nitride diffusion layer 7 has been formed, the bearing element 5 is removed from the nitriding chamber and the surface of the nitride diffusion layer 7 (i.e. the counterface 6 of the bearing element 5) is machined to achieve a surface roughness of less than 18 nm CLA, and preferably less than 6 nm CLA. Machining of the surface is preferably by electrolytic grinding as described in, for example, EP-A-1078714.

After machining, a nitride diffusion layer 7 of at least 5 µm is preferably maintained at the counterface 6. The nitride diffusion layer 7 is harder than the titanium alloy and therefore provides a harder counterface 6. Additionally, the nitride diffusion layer 7 provides a better surface for adhering a layer of wear-resistant material 8 formed over the bearing element 5. In particular, the layer of wear-resistant material 8 better adheres to the nitride diffusion layer 7 than to a titanium alloy surface.

In manufacturing the self-lubricating bearing 1 of Figure 3, a layer of a wear-resistant material 8 is deposited over the machined surface 9 of the nitride diffusion layer 7. Conventional methods of deposition, such as electroplating, physical and chemical vapour deposition, may be employed depending upon the material to be deposited. The layer of wear-resistant material 5 is preferably deposited to a thickness of between 1 and 4 µm, and more preferably around 2 µm. The surface roughness of the layer of wear-resistant material 8 corresponds substantially to that of the underlying machined surface 9 of the nitride diffusion layer 7.

As a consequence of machining the nitride diffusion layer 7 prior to depositing the layer of wear-resistant material 8 result, no machining of the wear-resistant material 8 is required in order to obtain a counterface 6 surface roughness less than 18 nm. This offers a significant benefit over alternative methods of forming the self-lubricating bearing 1 of Figure 3, in which a thick (~30 µm) layer of wear-resistant material 8 is deposited over the bearing element 5 (with or without the nitride diffusion layer 7) and then subsequently machined. Owing to the relative softness of the underlying titanium alloy, machining the layer of wear-resistant material 8 can cause the layer 8 to crack and/or separate from the bearing element 5.

Owing to the relative softness of titanium alloys, there is a difficulty in machining the alloy to obtain the desired surface finish. The present invention overcomes this problem by providing a hardened layer (e.g. nitride diffusion layer) which may be more easily machined. Consequently, smoother surface finishes are made feasible and hence the lifespan of the self-lubricating bearing is increased.

Additionally, bearing elements having a hard coating disposed over the counterface may be manufactured, again with a final surface roughness of less than 18 nm CLA, without the need to machine the coating. Consequently, the problems normally associated with machining a thin, hard coating deposited on a metal body (e.g. cracking, spalling and/or separation of the coating from the metal body) are no longer an issue.

When used in this Specification and Claims, the terms "comprises" and "comprising" and variations thereof mean that the specified features, steps or integers are included. The terms are not to be interpreted to exclude the presence of other features, steps or components.

## Claims

1. A method of manufacturing a self-lubricating bearing (1) comprising the steps of:
providing a bearing element (5) of a titanium alloy;
nitriding at least a portion of a surface of the bearing element (5) to form a nitride diffusion layer (7);
machining a surface of the nitride diffusion layer (7) to produce a counterface having a surface roughness of less than 18 nm;
depositing a coating (8) of wear-resistant material over the surface of the nitride diffusion layer (7);
providing a self-lubricating liner (4); and
arranging the bearing element (5) and liner (4) such that the counterface is in sliding contact with the liner (4).

2. A method as claimed in Claim 1, wherein the surface of the nitride diffusion layer (7) is machined so as to produce a counterface having a surface roughness less than 6 nm.

3. A method as claimed in any one of the preceding claims, wherein the surface of the bearing element (5) prior to nitriding has an initial surface roughness and the nitride diffusion layer (7) prior to machining extends to a depth greater than the depth of the initial surface roughness.

4. A method as claimed in any one of the preceding claims, wherein the nitride diffusion layer (7) prior to machining extends to a depth of at least 25 µm.

5. A method as claimed in any one of the preceding claims, wherein the nitride diffusion layer (7) is machined by electrolytic grinding.

6. A method as claimed in any one of the preceding claims, wherein the temperature of the bearing elements during nitriding is maintained below 750 °C.

7. A method as claimed in any one of the preceding claims, wherein nitriding continues for no more than four hours.

8. A method as claimed in any preceding claim, wherein the coating (8) is no more than 4 µm thick.

9. A method as claimed in any preceding claim, wherein the hardness of the coating (8) is greater than that of the surface of the nitride diffusion layer (7) after machining.

10. A self-lubricating bearing (1) comprising a self-lubricating liner (4) and a bearing element (5) having a counterface in sliding contact with the liner (4), wherein the bearing element (5) is of a titanium alloy having a nitride diffusion layer (7) at the counterface, and the counterface has a surface roughness less than 18 nm, wherein the bearing element (5) further comprises a coating (8) of a wear-resistant material disposed over the nitride diffusion layer (7).

11. A bearing (1) as claimed in Claim 10, wherein the surface roughness of the counterface is less than 6 nm.

12. A bearing (1) as claimed in Claim 10 or 11, wherein the hardness of the wear-resistant material is greater than that at the surface of the nitride diffusion layer (7).

13. A bearing (1) as claimed in Claims 10, 11 or 12, wherein the coating (8) of wear-resistant material is no more than 4 µm thick.

14. A bearing (1) as claimed in any one of Claims 10 to 13, wherein the hardness of the counterface is at least 75 Rc.

15. A bearing (1) as claimed in any one of Claims 10 to 14, wherein the counterface has a spherical curvature.

16. A bearing (1) as claimed in any one of Claims 10 to 15, wherein the bearing element is a ball.

17. A bearing element (5) for use in a self-lubricating bearing (1), the bearing element (5) being of a titanium alloy and having a nitride diffusion layer (7) at a counterface, and the counterface has a surface roughness less than 18 nm, wherein the bearing element (5) further comprises a coating (8) of a wear-resistant material disposed over the nitride diffusion layer (7).

18. A bearing (1) as claimed in any of claims 10 to 16 comprising a housing (2) having a spherical bearing surface, wherein the self-lubricating liner (4) secured to the bearing surface, and the bearing element (5) is a ball held within the housing and having a counterface in sliding contact with the liner (4).

## Patentansprüche

1. Verfahren zur Herstellung eines selbstschmierenden Lagers (1), umfassend die folgenden Schritte:
das Bereitstellen eines Lagerelements (5) aus einer Titanlegierung;
das Nitrieren von mindestens einem Abschnitt einer Oberfläche des Lagerelements (5), um eine Nitriddiffusionsschicht (7) zu bilden;
das Bearbeiten einer Oberfläche der Nitriddiffusionsschicht (7), um eine Gegenfläche mit einer Oberflächenrauigkeit von weniger als 18 nm zu erzeugen;
das Aufbringen einer Beschichtung (8) aus verschleißfestem Material auf die Oberfläche der Nitriddiffusionsschicht (7);
das Bereitstellen einer selbstschmierenden Auskleidung (4); und
das Anordnen des Lagerelements (5) und der Auskleidung (4) in einer Weise, dass die Gegenfläche Gleitkontakt mit der Auskleidung (4) hat.

2. Verfahren gemäß Anspruch 1, wobei die Oberfläche der Nitriddiffusionsschicht (7) in einer Weise bearbeitet wird, dass eine Gegenfläche erzeugt wird, die eine Oberflächenrauigkeit von weniger als 6 nm hat.

3. Verfahren gemäß einem der vorherigen Anspruche, wobei die Oberfläche des Lagerelements (5) vor dem Nitrieren eine anfängliche Oberflächenrauigkeit hat und sich die Nitriddiffusionsschicht (7) vor dem Bearbeiten auf eine Tiefe erstreckt, die größer ist als die Tiefe der anfänglichen Oberflächenrauigkeit.

4. Verfahren gemäß einem der vorherigen Ansprüche, wobei sich die Nitriddiffusionsschicht (7) vor dem Bearbeiten auf eine Tiefe von mindestens 25 µm erstreckt.

5. Verfahren gemäß einem der vorherigen Ansprüche, wobei die Nitriddiffusionsschicht (7) durch elektrolytisches Schleifen bearbeitet wird.

6. Verfahren gemäß einem der vorherigen Ansprüche, wobei die Temperatur der Lagerelemente während des Nitrierens unter 750 °C gehalten wird.

7. Verfahren gemäß einem der vorherigen Ansprüche, wobei das Nitrieren nicht mehr als vier Stunden andauert.

8. Verfahren gemäß einem der vorherigen Ansprüche, wobei die Beschichtung (8) nicht mehr als 4 µm dick ist.

9. Verfahren gemäß einem der vorherigen Ansprüche, wobei die Härte der Beschichtung (8) größer als die der Oberfläche der Nitriddiffusionsschicht (7) nach der Bearbeitung ist.

10. Selbstschmierendes Lager (1), umfassend eine selbstschmierende Auskleidung (4) und ein Lagerelement (5), das eine Gegenfläche aufweist, die Gleitkontakt mit der Auskleidung (4) hat, wobei das Lagerelement (5) aus einer Titanlegierung mit einer Nitriddiffusionsschicht (7) an der Gegenfläche besteht und die Gegenfläche eine Oberflächenrauigkeit von weniger als 18 nm hat, wobei das Lagerelement (5) des Weiteren eine Beschichtung (8) aus einem verschleißfesten Material umfasst, das über der Nitriddiffusionsschicht (7) angeordnet ist.

11. Lager (1) gemäß Anspruch 10, wobei die Oberflächenrauigkeit der Gegenfläche weniger als 6 nm beträgt.

12. Lager (1) gemäß Anspruch 10 oder 11, wobei die Härte des verschleißfesten Materials größer als die der Oberfläche der Nitriddiffusionsschicht (7) ist.

13. Lager (1) gemäß Anspruch 10, 11 oder 12, wobei die Beschichtung (8) aus verschleißfestem Material nicht mehr als 4 µm dick ist.

14. Lager (1) gemäß einem der Ansprüche 10 bis 13, wobei die Härte der Gegenfläche mindestens 75 Rc beträgt.

15. Lager (1) gemäß einem der Ansprüche 10 bis 14, wobei die Gegenfläche eine sphärische Krümmung hat.

16. Lager (1) gemäß einem der Ansprüche 10 bis 15, wobei das Lagerelement eine Kugel ist.

17. Lagerelement (5) zur Verwendung in einem selbstschmierenden Lager (1), wobei das Lagerelement (5) aus einer Titanlegierung besteht und eine Nitriddiffusionsschicht (7) auf einer Gegenfläche aufweist, und die Gegenfläche hat eine Oberflächenrauigkeit von weniger als 18 nm, wobei das Lagerelement (5) des Weiteren eine Beschichtung (8) aus einem verschleißfesten Material umfasst, das über der Nitriddiffusionsschicht (7) angeordnet ist.

18. Lager (1) gemäß einem der Ansprüche 10 bis 16, umfassend ein Gehäuse (2), das eine sphärische Lagerfläche hat, wobei die selbstschmierende Auskleidung (4) an der Lagerfläche befestigt ist und das Lagerelement (5) eine Kugel ist, die in dem Gehäuse gehalten wird und eine Gegenfläche hat, die Gleitkontakt mit der Auskleidung (4) hat.

## Revendications

1. Un procédé de fabrication d'un roulement autolubrifiant (1) comprenant les opérations suivantes :
la fourniture d'un élément de roulement (5) d'un alliage de titane,
la nitruration d'au moins une partie d'une surface de l'élément de roulement (5) de façon à former une couche de diffusion de nitrure (7),
l'usinage d'une surface de la couche de diffusion de nitrure (7) de façon à produire une contreface possédant une rugosité de surface inférieure à 18 nm,
le dépôt d'une pellicule (8) d'un matériau résistant à l'usure sur la surface de la couche de diffusion de nitrure (7),
la fourniture d'une garniture autolubrifiante (4), et
l'agencement de l'élément de roulement (5) et de la garniture (4) de telle manière que la contreface soit en contact coulissant avec la garniture (4).

2. Un procédé selon la revendication 1, où la surface de la couche de diffusion de nitrure (7) est usinée de façon à produire une contreface possédant une rugosité de surface inférieure à 6 nm.

3. Un procédé selon l'une quelconque des revendications précédentes, où la surface de l'élément de roulement (5) avant nitruration possède une rugosité de surface initiale et la couche de diffusion de nitrure (7) avant usinage s'étend à une profondeur supérieure à la profondeur de la rugosité de surface initiale.

4. Un procédé selon l'une quelconque des revendications précédentes, où la couche de diffusion de nitrure (7) avant usinage s'étend à une profondeur d'au moins 25 µm.

5. Un procédé selon l'une quelconque des revendications précédentes, où la couche de diffusion de nitrure (7) est usinée par ponçage électrolytique.

6. Un procédé selon l'une quelconque des revendications précédentes, où la température des éléments de roulement au cours de la nitruration est maintenue en dessous de 750°C.

7. Un procédé selon l'une quelconque des revendications précédentes, où la nitruration se poursuit pendant quatre heures au maximum.

8. Un procédé selon l'une quelconque des revendications précédentes, où la pellicule (8) possède une épaisseur maximale de 4 µm.

9. Un procédé selon l'une quelconque des revendications précédentes, où la dureté de la pellicule (8) est supérieure à celle de la surface de la couche de diffusion de nitrure (7) après usinage.

10. Un roulement autolubrifiant (1) comprenant une garniture autolubrifiante (4) et un élément de roulement (5) possédant une contreface en contact coulissant avec la garniture (4), où l'élément de roulement (5) est d'un alliage de titane possédant une couche de diffusion de nitrure (7) sur la contreface, et la contreface possède une rugosité de surface inférieure à 18 nm, où l'élément de roulement (5) comprend en outre une pellicule (8) d'un matériau résistant à l'usure déposée sur la surface de la couche de diffusion de nitrure (7),

11. Un roulement (1) selon la revendication 10, où la rugosité de surface de la contreface est inférieure à 6 nm.

12. Un roulement (1) selon la revendication 10 ou 11, où la dureté du matériau résistant à l'usure est supérieure à celle à la surface de la couche de diffusion de nitrure (7).

13. Un roulement (1) selon la revendication 10, 11 ou 12, où la pellicule (8) de matériau résistant à l'usure possède une épaisseur maximale de 4 µm.

14. Un roulement (1) selon l'une quelconque des revendications 10 à 13, où la dureté de la contreface est d'au moins 75 Rc.

15. Un roulement (1) selon l'une quelconque des revendications 10 à 14, où la contreface possède une courbure sphérique.

16. Un roulement (1) selon l'une quelconque des revendications 10 à 15, où l'élément de roulement est une bille.

17. Un élément de roulement (5) destiné à une utilisation dans un roulement autolubrifiant (1), l'élément de roulement (5) étant d'un alliage de titane et possédant une couche de diffusion de nitrure (7) sur une contreface, et la contreface possède une rugosité de surface inférieure à 18 nm, où l'élément de roulement (5) comprend en outre une pellicule (8) d'un matériau résistant à l'usure déposée sur la couche de diffusion de nitrure (7).

18. Un roulement (1) selon l'une quelconque des revendications 10 à 16 comprenant un boîtier (2) possédant une surface d'appui sphérique, où la garniture autolubrifiante (4) est fixée sur la surface d'appui, et l'élément de roulement (5) est une bille contenue dans le boîtier et possédant une contreface en contact coulissant avec la garniture (4).
